# DEMANDE DE BREVET EUROPEEN

(11) **EP 1 600 287 A1**
(43) Date de publication de la demande: **30.11.2005**
(21) Numéro de dépôt: 05010921.4
(22) Date de dépôt: 20.05.2005
(51) Int. Cl.: B32B 3/26

(54) **Matériau dit alvéolaire**

(30) Priorité: 28.05.2004 FR 0405785
(71) Demandeur: GAILLON S.A.S., 69830 St. Georges de Reneins (FR)
(72) Inventeur: Dupoyet, Guy, 69740 Genas (FR); Gaiffe Xavier, 69460 Blace (FR)

(57) **Abrégé**

Ce matériau (10) comprend deux parois de base (12) formant les faces principales du matériau (10) et des cloisons (13) perpendiculaires à ces parois de base (12) et reliées à celles-ci, maintenant ces dernières à distance l'une de l'autre.

Selon l'invention, chaque cloison (13), ou au moins une partie des cloisons (13), présente une épaisseur augmentée au niveau de sa zone médiane (13a), dans le sens de sa hauteur.

## Description

La présente invention concerne un matériau dit "alvéolaire", que l'on trouve habituellement soit sous forme de plaque ou de feuille, soit sous forme de profilés.

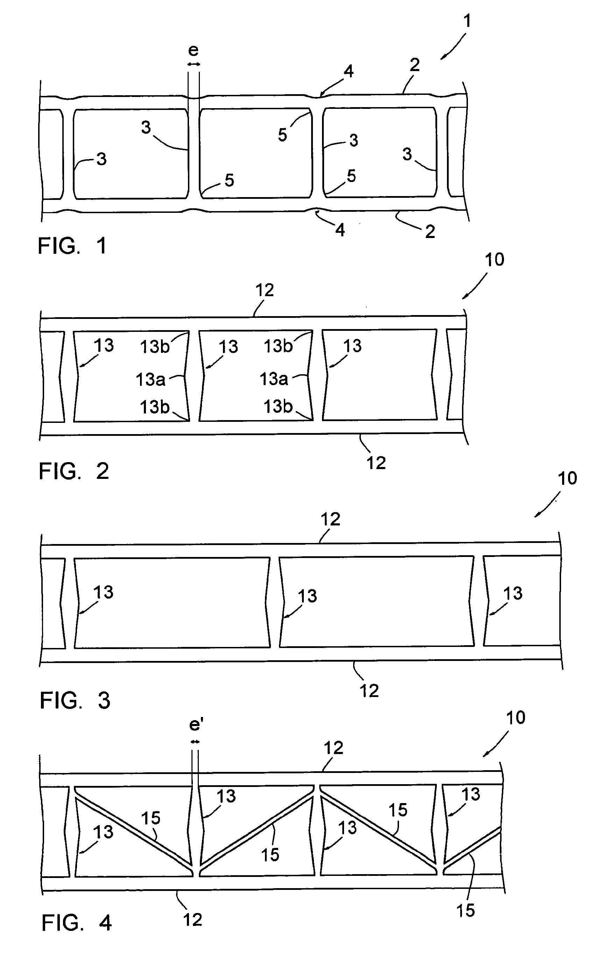

Comme le montre la figure 1, un matériau 1 de ce type comprend deux parois de base 2 formant les faces principales du matériau et des cloisons 3 perpendiculaires à ces parois de base 2, maintenant ces dernières à distance l'une de l'autre. Ce matériau est notamment en matière synthétique, lesdites parois de base et cloisons étant réalisées par une même opération de moulage, en particulier par extrusion.

Ce genre de matériau est bien connu et est d'utilisation courante notamment pour la réalisation de boîtes d'emballage, d'intercalaires de palettes de manutention ou de panneaux d'affichage, lorsqu'il s'agit de plaques ou de feuilles, ou pour la réalisation de planchers ou de panneaux, lorsqu'il s'agit de profilés.

Ce genre de matériau présente cependant l'inconvénient important d'avoir une résistance limitée à la compression dans une direction perpendiculaire aux parois de base 2, du fait soit d'un flambage des cloisons 3, c'est-à-dire d'un pliage longitudinal de celles-ci, soit d'une déformation "en parallélogramme" du matériau 1 par suite de pivotements des cloisons 3 par rapport aux parois de base 2 au niveau des zones de jonction de ces cloisons à ces parois de base.

Ce genre de matériau a également pour inconvénients d'avoir une résistance moyenne à la pliure, une telle pliure provoquant un flambage desdites cloisons dans les zones du matériau adjacentes à la pliure, et de présenter un aspect de surface irrégulier au niveau des faces extérieures des parois de base 2, ce qui limite son utilisation dans certaines applications requérant des aspects de surface lisses. Cet aspect de surface irrégulier résulte de l'existence de dépressions longitudinales 4 au droit des cloisons 3 du fait du retrait de la matière lors de son refroidissement, ce retrait se produisant de manière différenciée aux droits des cloisons 3 et entre ces cloisons compte tenu des épaisseurs différentes de la matière en ces différentes zones (phénomène bien connu dit des "chaudes de retrait"). Ces retraits existent d'autant plus qu'il est courant de prévoir des congés 5 au niveau des zones de jonction des cloisons 3 avec les parois de base 2, afin de renforcer la résistance du matériau à la déformation "en parallélogramme".

La présente invention vise à remédier à l'ensemble de ces inconvénients.

Son objectif principal est donc de fournir un matériau présentant des résistances augmentées à la compression dans une direction perpendiculaire aux parois de base, et à la pliure.

Un autre objectif de l'invention est de fournir un matériau présentant un aspect de surface aussi lisse que possible au niveau d'au moins une des faces extérieures de ses parois de base.

Pour atteindre ces objectifs, dans le matériau selon l'invention, chaque cloison, ou au moins une partie des cloisons, présente une épaisseur augmentée au niveau de sa zone médiane, dans le sens de sa hauteur.

Cette épaisseur augmentée permet l'obtention d'une résistance supérieure des cloisons vis-à-vis de pliages longitudinaux au niveau de leurs zones médianes. Il en résulte une résistance supérieure du matériau à la compression dans une direction perpendiculaire auxdites parois de base, ainsi qu'à la pliure. Cette épaisseur augmentée permet de plus de faciliter grandement l'arrivée des flux de matière dans les zones médianes des cloisons lors de l'opération de moulage, garantissant ainsi une bien meilleure résistance au flambage des cloisons, donc une bien meilleure résistance à la compression de l'ensemble du matériau. La demanderesse a en effet pu constater que, lorsque les cloisons sont à épaisseurs constantes, il existe souvent une difficulté à alimenter les zones médianes des cloisons lors de l'opération d'extrusion du matériau alvéolaire ; un éventuel manque de matière dans ces zones médianes favorise le flambage précité des cloisons.

L'augmentation de l'épaisseur des cloisons peut ne pas être constante d'une zone de jonction d'une cloison à une paroi de base vers ladite zone médiane. De préférence toutefois, l'épaisseur d'une cloison augmente régulièrement d'au moins une telle zone de jonction vers ladite zone médiane.

Cette augmentation régulière de l'épaisseur d'une cloison permet d'éliminer toute transition trop rapide de l'épaisseur de la cloison, susceptible de constituer une zone de concentration de contraintes, au niveau de laquelle pourrait se produire un pliage.

L'augmentation de la résistance des cloisons au niveau de leur zone médiane permet de prévoir un espacement supérieur des cloisons, à résistance égale du matériau. Ainsi, dans le matériau selon l'invention, comprenant uniquement des cloisons à épaisseurs variables telles que précitées, il est possible de prévoir une augmentation de l'entraxe des cloisons pouvant aller de 20 à 100 % par rapport à l'entraxe des cloisons d'un matériau conforme à la technique antérieure, incluant des cloisons d'épaisseurs constantes et ayant un entraxe des cloisons pouvant aller de 0,8 à 1,5 fois l'épaisseur du matériau.

Cette augmentation de l'entraxe des cloisons réduit d'autant les irrégularités de surfaces des faces extérieures des parois de base.

Selon une possibilité, l'augmentation de l'épaisseur des cloisons se fait depuis chaque zone de jonction en direction de la zone médiane de la cloison, de sorte que la cloison présente, vue de profil, une forme "en losange".

Selon une autre possibilité, l'épaisseur d'une cloison augmente régulièrement d'une zone de jonction de la cloison à une paroi de base vers la zone médiane de cette cloison, puis cette épaisseur reste constante, ou continue à augmenter, de cette zone médiane vers la zone de jonction de la cloison à l'autre paroi de base.

Cette cloison comprend ainsi une zone de jonction relativement étroite pour sa liaison à une paroi de base, ce qui limite les irrégularités de surface sur la face extérieure de cette paroi de base, et une zone de jonction relativement épaisse pour sa liaison à l'autre paroi de base, permettant une liaison rigide de la cloison à cette autre paroi de base.

Le matériau a ainsi une face extérieure relativement lisse, plus particulièrement destinée à être visible dans un construction ou à recevoir une impression, et a par ailleurs une bonne résistance à la pliure et aux déformations "en parallélogramme" compte tenu de la liaison rigide de la cloison à ladite autre paroi de base.

La zone de jonction relativement épaisse peut être encore élargie par des congés.

Selon un autre aspect de l'invention, le matériau comprend des parois obliques reliant une cloison à une cloison adjacente ou à l'une des parois de base.

Ces parois obliques forment des entretoises qui permettent, conjointement à l'épaisseur augmentée précitée des zones médianes des cloisons, de renforcer les zones de jonction des cloisons aux parois de base, et donc d'augmenter encore la résistance des cloisons à la pliure longitudinale. Ces parois obliques permettent également de réduire fortement le risque de pivotement des cloisons par rapport aux parois de base et donc d'empêcher l'effet précité de "déformation en parallélogramme".

Le matériau peut comprendre une seule paroi oblique entre deux cloisons adjacentes, ou deux parois obliques disposées en "X", ou encore des parois obliques en lignes brisées reliées à une paroi de base ou au deux parois de base entre deux cloisons.

Les parois obliques sont de préférence reliées aux cloisons en des emplacements situés en retrait des zones de jonction de ces cloisons aux parois de base.

Ces liaisons en retrait permettent de ne pas augmenter la section desdites zones de jonction, et donc de ne pas augmenter les irrégularités de surface dues au phénomène précité de "chaudes de retrait".

De préférence, les épaisseurs de chaque cloison, ou d'une partie des cloisons, sont réduites de 20 à 50 % au niveau des zones de jonction de cette ou ces cloisons aux parois de base, par rapport à l'épaisseur des zones de jonction des cloisons d'un matériau conforme à la technique antérieure, dépourvu de parois obliques et ayant des zones de jonction allant de 0,8 à 1,3 fois l'épaisseur d'une paroi de base.

Ces réductions d'épaisseurs, rendues possibles par lesdites zones de jonction relativement épaisses ou lesdites parois obliques, permettent de limiter les sections desdites zones de jonction et donc de diminuer les retraits de la matière lors de son refroidissement. Le matériau selon l'invention a ainsi un aspect de surface, au niveau de la face extérieure d'au moins une des parois de base, nettement plus régulier que l'aspect de surface d'un matériau selon la technique antérieure.

Chaque cloison, ou une partie des cloisons du matériau, peut comporter une ou plusieurs ailes faisant saillie d'elle-même latéralement, notamment, s'agissant des cloisons à zones médianes d'épaisseurs augmentées telles que précitées, faisant saillie des zones médianes de ces cloisons, sensiblement perpendiculairement à celles-ci.

Ces ailes permettent de compenser tout retrait de la matière lors de son refroidissement au niveau des zones médianes de ces cloisons. Elles permettent également de favoriser la diffusion de la matière au niveau des zones médianes de ces cloisons au moment du moulage.

L'invention sera bien comprise, et d'autres caractéristiques et avantages de celle-ci apparaîtront, en référence au dessin schématique annexé, représentant, à titre d'exemples non limitatifs, plusieurs formes de réalisation possibles du matériau qu'elle concerne.

Les figures 2 à 12 sont des vues par le côté, à échelle agrandie, de portions de ce matériau, selon différentes formes de réalisation.

Par simplification, les parties ou éléments d'une forme de réalisation qui se retrouvent de manière identique ou similaire dans une autre forme de réalisation seront identifiés par les mêmes références numériques et ne seront pas à nouveau décrits.

La figure 2 représente un matériau dit "alvéolaire" 10 sous forme de plaque, comprenant deux parois de base 12 formant les faces principales du matériau 10 et des cloisons 13 perpendiculaires à ces parois de base 12, maintenant ces dernières à distance l'une de l'autre. Ce matériau 10 est en matière synthétique, lesdites parois de base 12 et cloisons 13 étant réalisées par une même opération de moulage, en particulier par extrusion.

Ainsi que cela est représenté, chaque cloison 13 du matériau 10, ou chaque cloison 13 d'une partie des cloisons 13 que comprend ce matériau 10, présente une épaisseur augmentée au niveau de sa zone médiane 13a, dans le sens de sa hauteur. L'épaisseur d'une cloison 13 augmente régulièrement d'une zone de jonction 13b de la cloison 13 à une paroi de base 12 vers ladite zone médiane 13a, de sorte que la cloison 13 présente, vue de profil, une forme "en losange".

La figure 3 représente un matériau 10 similaire à celui de la figure 2, sinon que l'entraxe des cloisons 13 est augmenté de l'ordre de 60 % par rapport à l'entraxe des cloisons 3 du matériau 1 montré sur la figure 1.

La figure 4 représente un matériau 10 similaire à celui de la figure 2, sinon que le matériau 10 comprend des parois obliques 15 reliant une cloison 13 à une cloison 13 adjacente, et que les épaisseurs e' de chaque cloison 13, ou d'une partie des cloisons 13, sont réduites de l'ordre de 50 % au niveau des zones de jonction 13b de cette ou ces cloisons 13 aux parois de base 12, par rapport à l'épaisseur e des zones de jonction des cloisons 3 du matériau 1 conforme à la technique antérieure.

Les parois obliques 15 ont des inclinaisons alternées d'une paire de cloisons 13 à une paire de cloisons 13 immédiatement adjacente. Ces parois 15 sont en outre reliées aux cloisons 13 en des emplacements situés en retrait des zones de jonction 13a de ces cloisons 13 aux parois de base 12.

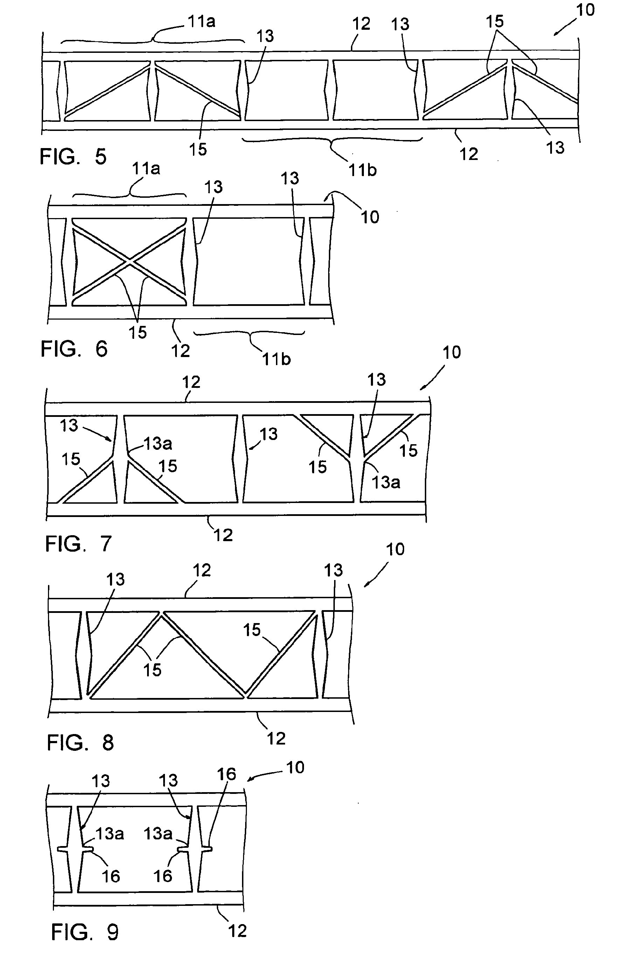

La figure 5 représente un matériau 10 comprenant des modules de structures 11 a et 11 b alternés. Le module 11 a comprend trois cloisons 13 successives reliées par des parois obliques 15 d'inclinaisons alternées. Le module 11 b comprend également trois cloisons 13, dont les deux cloisons latérales sont communes aux cloisons latérales 13 du module 11a.

La figure 6 montre un matériau 10, comprenant également des modules de structures 11 a, 11b alternés. Le module 11a comprend deux cloisons 13 reliées par une paire de parois obliques 15 se croisant, et formant donc, vues en bout, un croisillon. Le module 11b comprend également deux cloisons 13, chacune communes avec les cloisons 13 des deux modules 11a adjacents.

La figure 7 représente un matériau 10 dans lequel des parois obliques 15 relient les zones médianes 13a de certaines cloisons 13 à une des parois de base 12, au niveau de zones de ces parois 12 situées à égale distance de deux cloisons 13 adjacentes. Dans l'exemple représenté par cette figure 7, le matériau 10 présente un module de structure comprenant trois cloisons 13, dans lequel une première cloison 13 comprend deux parois latérales 15 reliant sa zone médiane 13a à une paroi de base 2, une deuxième cloison 13 est dépourvue de parois obliques 15, et une troisième cloison 13 comprend deux parois latérales 15 reliant sa zone médiane 13a à l'autre paroi de base 2.

Le matériau 10 représenté sur la figure 8 comprend un module de structure 11 comprenant deux cloisons 13 et une série de trois parois obliques 15 formant une ligne brisée, une première paroi 15 reliant une cloison 13 à une paroi de base 12, une deuxième paroi 15, consécutive à la première paroi 15, reliant cette paroi de base 12 à l'autre paroi de base 12, et une troisième paroi 15, consécutive à la deuxième paroi 15, reliant cette autre paroi de base 12 à la deuxième cloison 13.

La figure 9 montre un matériau 10 dont chaque cloison 13, ou chaque cloison 13 d'une partie des cloisons 13, comporte deux ailes 16 faisant saillie latéralement de la zone médiane 13a, sensiblement perpendiculairement à celle-ci, sur deux côtés opposés de cette zone médiane 13a.

Les épaisseurs augmentées des cloisons 13 permettent l'obtention d'une résistance supérieure de ces cloisons vis-à-vis de pliages longitudinaux au niveau de leurs zones médianes 13a. Il en résulte une résistance supérieure du matériau 10 à la compression dans une direction perpendiculaire auxdites parois de base 12, ainsi qu'à la pliure. Il en résulte également une possibilité de prévoir un espacement supérieur des cloisons 13, à résistance égale du matériau 10.

Les parois obliques 15 forment des entretoises qui permettent de renforcer les zones de jonction des cloisons 13 aux parois de base 12, de réduire fortement le risque de pivotement des cloisons 13 par rapport aux parois de base 12, et de réduire l'épaisseur de ces cloisons 13 au niveau de leurs zones de jonction 13b avec les parois de base 12, diminuant ainsi les irrégularités de surface dues au phénomène précité de "chaudes de retrait".

Les ailes 16 permettent de compenser tout retrait de la matière lors de son refroidissement au niveau des zones médianes 13a des cloisons 13, et favorisent surtout la diffusion de la matière au niveau de ces zones médianes 13a au moment du moulage.

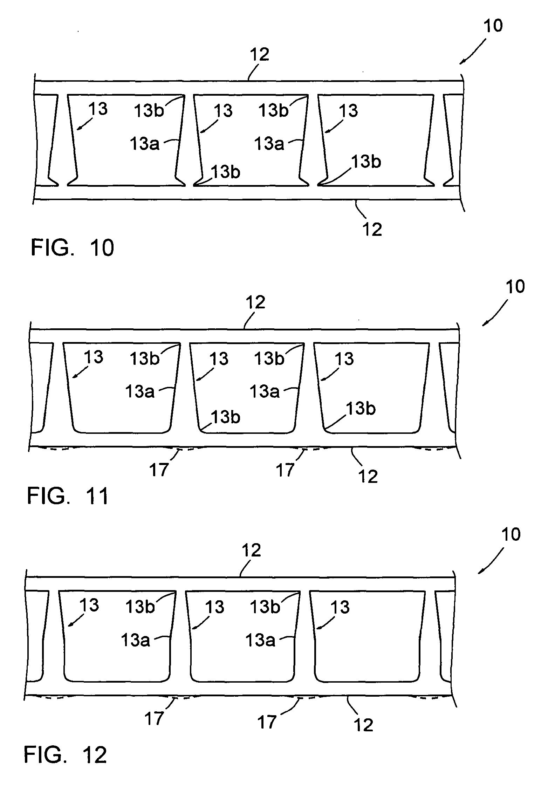

La figure 10 montre que la forme des cloisons 13 n'est pas forcément en losange symétrique par rapport à la zone médiane 13a mais que l'épaisseur de la cloison 13 peut continuer à augmenter au-delà de la zone médiane 13a.

La figure 11 montre une version du matériau 10 dans laquelle l'épaisseur de chaque cloison 13 augmente régulièrement d'une zone 13b de jonction de la cloison 13 à une paroi de base 12 vers la zone médiane 13a de cette cloison, puis cette épaisseur continue à augmenter de cette zone médiane 13a vers la zone 13b de jonction de la cloison 13 à l'autre paroi de base 12, les cloisons 13 ayant ainsi, vues de profil, une section transversale en triangle.

Cette cloison comprend ainsi une zone de jonction 13b relativement étroite pour sa liaison à une paroi de base 12, ce qui limite les irrégularités de surface sur la face extérieure de cette paroi de base, et une zone de jonction 13b relativement épaisse pour sa liaison à l'autre paroi de base 12, permettant une liaison rigide de la cloison à cette autre paroi de base.

Le matériau a ainsi une face extérieure relativement lisse plus particulièrement destinée à être visible dans une construction ou à recevoir une impression, et a par ailleurs une bonne résistance à la pliure et aux déformations "en parallélogramme" compte tenu de la liaison rigide de la cloison à ladite autre paroi de base.

Les zones de jonction 12b épaisses peuvent être encore élargies par des congés, comme cela est représenté.

La figure 12 montre que l'augmentation de l'épaisseur des cloisons 13 peut rester constante au-delà des zones médianes 13a des cloisons.

Dans le cas des versions du matériau 10 montrées sur les figures 11 et 12, il est possible de prévoir par moulage des lignes de surépaisseur 17 sur la face extérieure de la paroi de base 12 reliée au cloisons 13 par les zones de jonction 13b épaissies ; ces lignes 17 sont destinées à compenser le retrait de la matière au niveau de ces zones de jonction 13b, de sorte que la face extérieure de cette paroi de base 12 présente également une surface relativement lisse.

Il va de soi que l'invention n'est pas limitée à la forme de réalisation décrite ci-dessus à titre d'exemple mais qu'elle s'étend à toutes les formes de réalisations couvertes par les revendications ci-annexées.

## Revendications

1. Matériau (10) dit "alvéolaire", c'est-à-dire comprenant deux parois de base (12) formant les faces principales du matériau (10) et des cloisons (13) perpendiculaires à ces parois de base (12) et reliées à celles-ci, maintenant ces dernières à distance l'une de l'autre, **caractérisé en ce que** chaque cloison (13), ou au moins une partie des cloisons (13), présente une épaisseur augmentée au niveau de sa zone médiane (13a), dans le sens de sa hauteur.

2. Matériau (10) selon la revendication 1, **caractérisé en ce que** l'épaisseur d'une cloison (13) augmente régulièrement d'au moins une telle zone (13b) de jonction de cette cloison (13) à une paroi de base (12) vers ladite zone médiane (13a).

3. Matériau (10) selon la revendication 1 ou la revendication 2, **caractérisé en ce qu'**il comprend des cloisons (13) dont l'entraxe est augmenté de 20 à 100 % par rapport à l'entraxe des cloisons (3) d'un matériau (1) conforme à la technique antérieure, incluant des cloisons (3) d'épaisseurs constantes et ayant un entraxe des cloisons pouvant aller de 0,8 à 1,5 fois l'épaisseur du matériau.

4. Matériau (10) selon l'une des revendications 1 à 3, **caractérisé en ce que** l'augmentation de l'épaisseur des cloisons (13) se fait depuis chaque zone de jonction (13b) en direction de la zone médiane (13a) de la cloison (13), de sorte que la cloison (13) présente, vue de profil, une forme "en losange".

5. Matériau (10) selon l'une des revendications 1 à 3, **caractérisé en ce que** l'épaisseur d'une cloison (13) augmente régulièrement d'une zone de jonction (13b) de la cloison à une paroi de base (13) vers la zone médiane (13a) de cette cloison, puis cette épaisseur reste constante, ou continue à augmenter, de cette zone médiane (13a) vers la zone de jonction (13b) de la cloison à l'autre paroi de base (12).

6. Matériau (10) selon l'une des revendications 1 à 5, **caractérisé en ce qu'**il comprend des parois obliques (15) reliant une cloison (13) à une cloison (13) adjacente ou à l'une des parois de base (12).

7. Matériau (10) selon la revendication 6, **caractérisé en ce qu'**il comprend une seule paroi oblique (15) entre deux cloisons (13) adjacentes, ou deux parois obliques (15) disposées en "X", ou encore des parois obliques (15) en lignes brisées reliées à une paroi de base (12) ou au deux parois de base (12) entre deux cloisons (13).

8. Matériau (10) selon la revendication 6 ou la revendication 7, **caractérisé en ce que** les parois obliques (15) sont reliées aux cloisons (13) en des emplacements situés en retrait des zones (13b) de jonction de ces cloisons (13) aux parois de base (12).

9. Matériau (10) selon l'une des revendications 6 à 8, **caractérisé en ce que** les épaisseurs (e') de chaque cloison (13), ou d'une partie des cloisons (13), sont réduites de 20 à 50 % au niveau des zones (13b) de jonction de cette ou ces cloisons (13) aux parois de base (12), par rapport à l'épaisseur (e) des zones de jonction des cloisons (3) d'un matériau (1) conforme à la technique antérieure, dépourvu de parois obliques et ayant des zones de jonction allant de 0,8 à 1,3 fois l'épaisseur d'une paroi de base..

10. Matériau (10) selon l'une des revendications 1 à 9, **caractérisé en ce que** chaque cloison (13), ou une partie des cloisons (13) du matériau (10), comporte une ou plusieurs ailes (16) faisant saillie d'elle-même latéralement.
